Europäisches Patentamt

European Patent Office

Office européen des brevets

(11) Veröffentlichungsnummer: **0 100 903**
**B1**

(12) **EUROPÄISCHE PATENTSCHRIFT**

(45) Veröffentlichungstag der Patentschrift: 28.09.88

(21) Anmeldenummer: 83106907.5

(22) Anmeldetag: 14.07.83

(51) Int. Cl.⁴: **H 02 G 15/10**

(54) **Kabelmuffe.**

(30) Priorität: 09.08.82 DE 3229595

(43) Veröffentlichungstag der Anmeldung:
22.02.84 Patentblatt 84/08

(45) Bekanntmachung des Hinweises auf die
Patenterteilung:
28.09.88 Patentblatt 88/39

(84) Benannte Vertragsstaaten:
AT BE CH DE FR GB IT LI NL SE

(56) Entgegenhaltungen:
DE-A-2 320 254
DE-A-2 459 133
DE-C- 449 409
DE-U-8 222 478
FR-A-2 152 672
FR-A-2 245 101
US-A-3 148 241

(73) Patentinhaber: BASF Lacke + Farben
Aktiengesellschaft
Max-Winkelmann-Strasse 80
D-4400 Münster (DE)

(72) Erfinder: Hegemann, Günther, Dr. Dipl.-Chem.
Andreasstrasse 23
D-2000 Hamburg 60 (DE)

(74) Vertreter: Habbel, Hans-Georg, Dipl.-Ing.
Postfach 3429 Am Kanonengraben 11
D-4400 Münster (DE)

Courier Press, Leamington Spa, England.

**Beschreibung**

Die Erfindung betrifft eine Kabelmuffe zur Aufnahme einer Kabelverbindung oder -abzweigung, bestehend aus einer oberen und einer unteren Halbschale.

Kabelmuffen werden bei Verbindungen und Abzweigungen von elektrischen Kabeln eingesetzt. Zur Erzielung eines mechanischen Schutzes und zur elektrischen Isolierung der in der Kabelmuffe offenliegenden Kabel und Klemmen sowie zur Verhinderung des Eindringens von Feuchtigkeit wird der freie Raum innerhalb der Kabelmuffe vergossen, d.h. mit geeigneten Materialien ausgefüllt. In der vergangenheit wurde hierzu vielfach Bitumen verwendet, das im geschmolzenen Zustand in die fertig montierte Muffe eingefüllt wurde. Weiterhin ist es bekannt, insbesondere duroplastisch aushärtende Systeme auf der Basis von Epoxid- Polyurethan- und ungesättigten Polyesterharzen sowie Acrylatsysteme zu verwenden. Diese Materialien haben den Vorteil, im flüssigen, meist niedrig-viskosen Zustand in die Kabelmuffe eingefüllt werden zu können, wo sie nach mehr oder weniger langer Zeit unter Vernetzung aushärten. Sie weisen jedoch den Nachteil auf, daß es sich um Mehrkomponenten-Systeme handelt, deren Einzelkomponenten getrennt aufbewahrt und vor dem Verarbeiten intensiv gemischt werden müssen. Hierbei tritt das Problem auf, daß die Topfzeit zur Erzielung brauchbarer Aushärtungszeiten auch bei niedrigen Temperaturen begrenzt ist. Außerdem ist ein späteres Öffnen der Kabelverbindung z.B. zu Reparaturzwecken nur unter Verlust der gesamten Kabelmuffe einschließlich eines mehr oder weniger langen Kabelstückes möglich.

Es ist weiterhin bekannt, zur Vermeidung der geschilderten Probleme, dauerplastische Massen als Vergußmassen zu verwenden. Diese müssen eine Viskosität besitzen, die ein Gießen bei Umgebungstemperatur noch zuläßt. Deshalb müssen die Kabelmuffen besonders dicht schließen, um ein Herauslaufen des Materials dauerhaft zu verhindern.

Unabhängig von der Art der verwendeten Vergußmasse ist das Vergießen arbeitsaufwendig und erfordert das getrennte Bereithalten von Kabelmuffen und Vergußmassen. Bei hochviskosen Vergußmassen ist das Vergießen auch zeitaufwendig.

Es ist Aufgabe der Erfindung, diese Nachteile des Standes der Technik zu vermeiden und eine Kabelmuffe zu schaffen, die auf besonders einfache Weise installiert werden kann.

Diese Aufgabe kann überraschenderweise durch eine Kabelmuffe gelöst werden, die bereits vor der Installation eine dauerplastische Masse hoher Viskosität in ihrer oberen Halbschale und einem zusätzlichen Vorratsraum enthält.

Gegenstand der Erfindung ist also eine Kabelmuffe der eingangs genannten Art, die dadurch gekennzeichnet ist, daß

-die obere Halbschale einen Vorratsraum aufweist, in den ein Verdrängungskörper hineinbewegbar ist,

-die obere Halbschale einschließlich des Vorratsraumes mit einer dauerplastischen Masse gefüllt ist und

-die obere Halbschale mit einem entfernbaren Deckel verschlossen ist.

Die Vergußmasse ist vorteilhaft eine extrem hochviskose, insbesondere eine strukturviskose, dauerplastische Masse, die ohne Einwirkung von Druck oder Scherkräften nicht oder praktisch nicht fließfähig ist. Als derartige Massen sind beispielsweise Kohlenwasserstoffharze, chlorierte Paraffine oder Polyisobutylen geeignet, die mit mineralischen Füllstoffen hoch gefüllt sind. Die Massen können zum Beispiel Kieselsäure, Quarzmehl, Aluminiumhydroxid, oder Mikrodolomit in einem Anteil von 40 bis 70 Gewichtsprozent, bezogen auf die Gesamtmasse, enthalten. Durch diese Füllstoffe erhalten die Massen eine hohe Strukturviskosität.

Bei der Installation einer erfindungsgemäßen Kabelmuffe wird nun in dem freien Teil derselben die Verbindung der elektrischen Kabel hergestellt, der die obere Halbschale abschließende Deckel wird entfernt, die beiden Halbschalen werden zusammengesetzt und miteinander verbunden, und mittels des Verdrängungskörpers wird aus dem Vorratsraum die dauerplastische Masse in den verbliebenen freien Raum der Kabelmuffe eingepreßt.

Die erfindungsgemäße Kabelmuffe ist also besonders leicht zu installieren und erübrigt die getrennte Bereithaltung von Kabelmuffen und Vergußmassen. Bei der Installation kann der Verdrängungskörper nach dem Einbringen der Masse etwas zurückbewegt werden, um ein Ausdehnungsvolumen für die dauerplastische Masse zu schaffen.

Eine besonders einfache Handhabung wird dadurch erreicht, daß der Verdrängungskörper als Schraube ausgebildet ist, die inden Vorratsraum hineinschraubbar ist.

Der entfernbare Deckel der oberen Halbschale ist vorteilhaft als abziehbare Folie ausgebildet.

Um den Vorratsraum möglichst klein zu halten, ist vorteilhaft auch die untere Halbschale mit einer dauerplastischen Masse gefüllt. Die Kabelverbindung kann dann in die Masse hineingedrückt werden, und aus dem Vorratsraum werden nur noch geringfügige Hohlräume ausgefüllt. Insbesondere ist es vorteilhaft, wenn die untere Halbschale nur teilweise mit einer dauerplastischen Masse gefüllt ist. In diesem Fall kann die Verbindung der elektrischen Kabel in dem verbliebenen freien Raum angeordnet werden. Die dauerplastische Masse in der unteren Halbschale kann in gleicher Weise wie bei der oberen Halbschale durch einen entfernbaren Deckel, z.B. eine abziehbare Folie, abgeschlossen sein.

Die beim Ausfüllen der Hohlräume verdrängte Luft kann durch geringfügige Undichtigkeiten der Kabelmuffe entweichen. Vorteilhafter ist es jedoch, derartige Undichtigkeiten zu vermeiden und eine Entlüftungsöffnung vorzusehen. Diese Entlüftungsöffnung zeigt durch das Austreten der dauerplastischen Masse auch die vollständige Füllung der Hohlräume an.

Je nach Anordnung der dauerplastischen Masse kann die Entlüftungsöffnung vorteilhaft mit einem Steigrohr verbunden sein, das in die untere Halbschale hineinragt.

Zur Beobachtung des Einbringens der dauerplastischen Masse besteht vorteilhaft mindestens die obere Halbschale mindestens teilweise aus transparentem oder durchsichtigem Material.

Im folgenden werden Ausführungsbeispiele der Erfindung anhand der Zeichnung näher erläutert. Es zeigen

Figur 1
eine Kabelmuffe, deren obere Halbschale mit einer dauerplastischen Masse gefüllt ist, und

Figur 2
eine Kabelmuffe, deren obere Halbschale vollständig und deren untere Halbschale teilweise mit einer dauerplastischen Masse gefüllt ist.

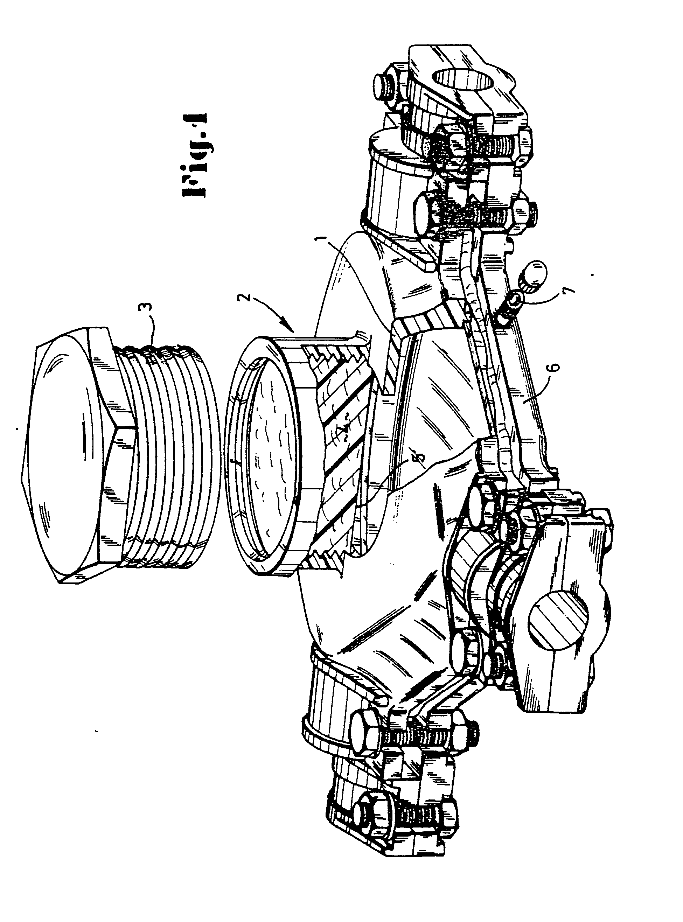

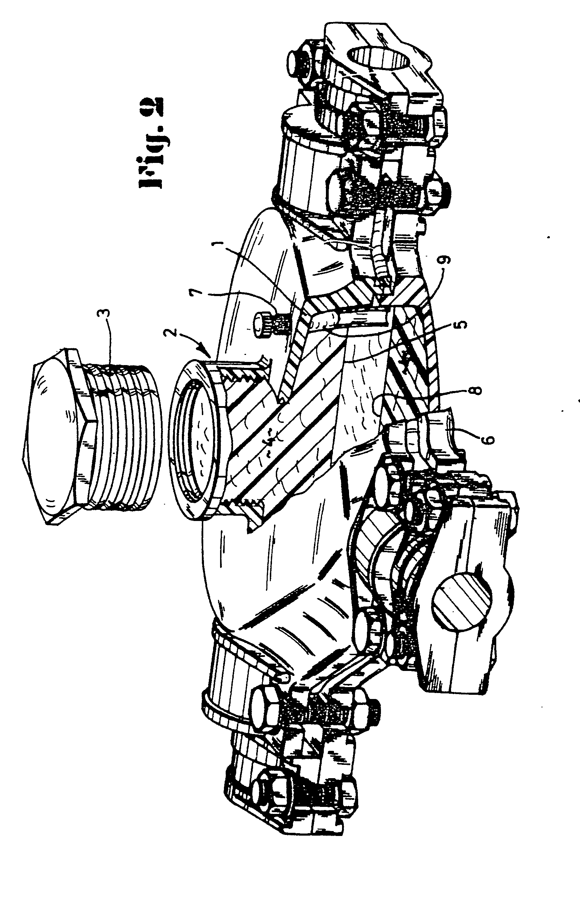

Die Kabelmuffen bestehen aus einer oberen Halbschale 1 und einer unteren Halbschale 6. Die obere Halbschale 1 ist mit einem Vorratsraum 2 verbunden, in den ein als Schraube ausgebildeter Verdrängungskörper 3 hineinbewegbar ist. Gemäß Figur 1 ist die obere Halbschale 1 einschließlich des Vorratsraumes 2 mit einer dauerplastischen Masse 4 ausgefüllt. Bei der Kabelmuffe gemäß Figur 2 ist auch die untere Halbschale 6 teilweise mit einer dauerplastischen Masse 4 gefüllt. Die dauerplastische Masse 4 ist jeweils durch einen Deckel 5 bzw. 8 in Form einer abziehbaren Folie abgeschlossen. Weiterhin ist jeweils eine Entlüftungsöffnung 7 vorhanden, die bei der Ausführungsform gemäß Figur 2 mit einem Steigrohr 9, das in den freien Raum der unteren Halbschale 6 hineinragt, verbunden.

**Patentansprüche**

1. Kabelmuffe zur Aufnahme einer Kabelverbindung oder -abzweigung, bestehend aus einer oberen und einer unteren Halbschale, dadurch gekennzeichnet, daß die obere Halbschale (1) einen Vorratsraum (2) aufweist, in den ein Verdrängungskörper (3) hineinbewegbar ist, die obere Halbschale (1) einschließlich des Vorratsraumes (2) mit einer dauerplastischen Masse (4) gefüllt ist und die obere Halbschale (1) mit einem entfernbaren Deckel (5) verschlossen ist.

2. Kabelmuffe nach Anspruch 1, dadurch gekennzeichnet, daß der Verdrängungskörper (3) als Schraube ausgebildet ist, die in den Vorratsraum (2) hineinschraubbar ist.

3. Kabelmuffe nach Anspruch 1 oder 2, dadurch gekennzeichnet, daß der Deckel (5) als abziehbare Folie ausgebildet ist.

4. Kabelmuffe nach Anspruch 1 bis 3, dadurch gekennzeichnet, daß die untere Halbschale (6) mit einer dauerplastischen Masse (4) gefüllt ist.

5. Kabelmuffe nach Anspruch 1 bis 3, dadurch gekennzeichnet, daß die untere. Halbschale (6) teilweise mit einer dauerplastischen Masse (4) gefüllt ist.

6. Kabelmuffe nach Anspruch 4 oder 5, dadurch gekennzeichnet, daß die dauerplastische Masse (4) durch einen entfernbaren Deckel (8) abgeschlossen ist.

7. Kabelmuffe nach Anspruch 1 bis 6, gekennzeichnet durch eine Entlüftungsöffnung (7).

8. Kabelmuffe nach Anspruch 7, dadurch gekennzeichnet, daß die Entlüftungsöffnung (7) mit einem in die untere Halbschale (6) hineinragenden Steigrohr (9) verbunden ist.

9. Kabelmuffe nach Anspruch 1 bis 8, dadurch gekennzeichnet, daß mindestens die obere Halbschale mindestens teilweise aus transparentem oder durchsichtigem Material besteht.

**Revendications**

1. Boîte de jonction ou de dérivation destinée à recevoir une jonction ou dérivation de câbles, constituée par une demi-coquille supérieure (1) et par une demicoquille inférieure (6), caractérisée en ce que:
-la demi-coquille supérieure (1) présente une capacité réservoir (2) dans laquelle on peut enfoncer un corps de refoulement (3),
-la demi-coquille supérieure (1) y compris la capacité réservoir (2), est remplie d'une pâte à plasticité permanente (4), et
-la demi-coquille supérieure (1) est fermée par une fermeture amovible (5).

2. Boîte de jonction ou de dérivation selon la revendication 1, caractérisée en ce que le corps de refoulement (3) est constitué par une vis que l'on peut visser pour l'enfoncer dans la capacité réservoir (2).

3. Boîte de jonction ou de dérivation selon la revendication 1 ou 2, caractérisée en ce que la fermeture (5) est constituée par une pellicule arrachable.

4. Boîte de jonction ou de dérivation selon l'une des revendications 1 à 3, caractérisée en ce que la demicoquille inférieure (6) est remplie d'une pâte à plasticité permanente (4).

5. Boîte de jonction ou de dérivation selon l'une des revendications 1 à 3, caractérisée en ce que la demi-coquille inférieure (6) est partiellement remplie d'une pâte à plasticité permanente (4).

6. Boîte de jonction ou de dérivation selon la revendication 4 ou 5, caractérisée en ce que la pâte à plasticité permanente (4) est enfermée par une fermeture amovible (8).

7. Boîte de jonction ou de dérivation selon l'une des revendications 1 à 6, caractérisée par un orifice de purge d'air (7).

8. Boîte de jonction ou de dérivation selon la revendication 7, caractérisée en ce que l'orifice de purge d'air (7) est raccordé à un tube montant (9) qui fait saillie dans la demi-coquille inférieure (6).

9. Boîte de jonction ou de dérivation selon l'une des revendications 1 à 8, caractérisée en ce qu'au moins la demi-coquille supérieure (1) est consti-

tuéé, au moins partiellement, d'une matière transparente, ou translucide.

## Claims

1. A cable sleeve for receiving a cable joint or cable branch, consisting of an upper and a lower half shell, wherein the upper half shell (1) has a storage space (2), into which a displacer (3) can be moved, the upper half shell (1), including the storage space (2), is filled with a permanently flexible compound (4) and the upper half shell (1) is closed by a removable cover (5).

2. A cable sleeve as claimed in claim 1, wherein the displacer (3) is designed as a screw which can be screwed into the storage space (2).

3. A cable sleeve as claimed in claim 1 or 2, wherein the cover (5) is designed as a foil which can be pulled off.

4. A cable sleeve as claimed in claim 1 or 2 or 3, wherein the lower half shell (6) is filled with a permanently flexible compound (4).

5. A cable sleeve as claimed in claim 1 or 2 or 3, wherein the lower half shell (6) is partially filled with a permanently flexible compound (4).

6. A cable sleeve as claimed in claim 4 or 5, wherein the permanently flexible compound (4) is closed off by a removal cover (8).

7. A cable sleeve as claimed in claim 1 or 2 or 3 or 4 or 5 or 6, having a vent opening (7).

8. A cable sleeve as claimed in claim 7, wherein the vent opening (7) is connected to a riser (9) protruding into the lower half shell (6).

9. A cable sleeve as claimed in claim 1 or 2 or 3 or 4 or 5 or 6 or 7 or 8, wherein at least the upper half shell consists at least partially of transparent or translucent material.

Fig.1

Fig. 2